# FASCICULE DE BREVET EUROPEEN

(11) **EP 4 499 417 B1**
(45) Date de publication et mention de la délivrance du brevet: **04.03.2026**
(21) Numéro de dépôt: 23712045.6
(22) Date de dépôt: 23.03.2023
(51) Int. Cl.: B60C 11/03, B60C 11/04, B60C 11/12

(54) **PNEUMATIQUE POUR UN VÉHICULE POIDS LOURD À FAIBLE BRUIT DE ROULEMENT**
GERÄUSCHARMER REIFEN FÜR SCHWERLASTFAHRZEUG
LOW-NOISE TYRE FOR A HEAVY GOODS VEHICLE

(30) Priorité: 30.03.2022 FR 2202855
(43) Date de publication de la demande: 05.02.2025
(73) Titulaire: COMPAGNIE GENERALE DES ETABLISSEMENTS MICHELIN, 63000 Clermont-Ferrand (FR)
(72) Inventeur: NEAU, Xavier, 63040 CLERMONT-FERRAND CEDEX 09 (FR); ARNOUX, Michael, 63040 CLERMONT-FERRAND CEDEX 09 (FR)
(74) Mandataire: M.F.P. Michelin
(86) Numéro de dépôt international: PCT/EP2023/057456
(87) Numéro de publication internationale: WO 2023/186694

(56) Documents cités:
- EP-B1- 3 344 476
- WO-A1-2018/083414
- FR-A1- 3 099 414
- US-A1- 2017 174 008
- US-A1- 2020 298 625
- US-A1- 2021 347 209

## Description

La présente invention a pour objet un pneumatique pour un véhicule poids lourd et concerne sa bande de roulement, comprenant plus particulièrement des découpures complexes évolutives, c'est-à-dire des découpures dont la forme évolue au cours de l'usure de la bande de roulement.

Une bande de roulement, constituée par au moins un matériau à base de caoutchouc, est la partie périphérique du pneumatique, destinée à être usée lors de son entrée en contact avec un sol par l'intermédiaire d'une surface de roulement et à adhérer au sol. Elle comprend généralement une sculpture, constituée par des découpures séparant des éléments en relief et donc délimitées par deux parois de matière caoutchoutique.

Par définition, la direction circonférentielle ou longitudinale est la direction de rotation du pneumatique, la direction axiale ou transversale est la direction parallèle à l'axe de rotation du pneumatique et la direction radiale est une direction perpendiculaire à l'axe de rotation du pneumatique.

Toute découpure de la bande de roulement, ayant une ligne moyenne non nécessairement rectiligne, c'est-à-dire pouvant être ondulée ou en zigzag, est circonférentielle, transversale ou oblique. Par définition la ligne moyenne d'une découpure est l'intersection de sa surface moyenne, équidistante des parois délimitant la découpure, avec la surface de roulement. Par convention une découpure est dite circonférentielle, lorsque sa ligne moyenne a une direction moyenne sensiblement circonférentielle, c'est-à-dire formant, avec la direction circonférentielle, un angle moyen inférieur à 30°. Une découpure est dite transversale, lorsque sa ligne moyenne a une direction moyenne sensiblement transversale, c'est-à-dire formant, avec la direction circonférentielle, un angle moyen au moins égal à 60°. Une découpure est dite oblique, lorsque sa ligne moyenne a une direction moyenne sensiblement oblique, c'est-à-dire forme, avec la direction circonférentielle, un angle moyen compris entre 30° et 60°.

De façon connue, les conditions de roulage par temps de pluie d'un véhicule, et plus particulièrement celles d'un véhicule poids lourd, requièrent une évacuation rapide de l'eau présente dans la surface de contact entre la bande de roulement et la chaussée. Cette évacuation permet d'assurer un contact direct du matériau constituant la bande de roulement avec cette chaussée par l'intermédiaire de la surface de roulement. L'eau qui n'est pas repoussée vers l'avant ou les côtés du pneumatique s'écoule ou est captée en partie dans les découpures formées dans la bande de roulement. L'évacuation de l'eau est assurée par les découpures qui forment un réseau d'écoulement de fluide qui doit être efficace pendant toute la durée d'utilisation du pneumatique, depuis son état neuf jusqu'à son état d'usure maximal. L'état d'usure maximal, fixé par la réglementation en vigueur, est l'état d'usure à partir duquel le pneumatique doit être retiré du véhicule pour des raisons de sécurité.

Généralement, les découpures permettant l'évacuation de l'eau sont essentiellement des découpures larges appelées rainures. Une rainure a une largeur telle que les parois de matière en vis-à-vis la délimitant n'entrent pas en contact l'une avec l'autre, lors du passage de la bande de roulement dans la surface de contact, lorsque le pneumatique est soumis à des conditions de gonflage et de charge recommandées telles que définies notamment par les normes européennes de la « European Tyre and Rim Technical Organization » (Organisation technique européenne du pneu et de la roue) ou « E.T.R.T.O » dans son « Standards Manual 2020 - Commercial Vehicle Tyres » (Manuel de normes 2020 - Pneus pour véhicules commerciaux). Les déformations en compression et en cisaillement des éléments en relief délimitant la rainure conditionnent les pressions dans le contact avec le sol et donc l'usure. De plus ces déformations, en générant des pertes hystérétiques dans le matériau de la bande de roulement, impactent la résistance au roulement, et donc la consommation de carburant du véhicule.

Une bande de roulement peut également comprendre des découpures étroites ou incisions. Une incision a une largeur telle que les parois de matière en vis-à-vis la délimitant entrent en contact au moins partiellement l'une avec l'autre, lors du passage de la bande de roulement dans la surface de contact, dans les conditions de charge et de pression du pneumatique spécifiées par l'E.T.R.T.O telles que définies précédemment. Une incision ne permet pas d'évacuer l'eau, mais, vis-à-vis de l'adhérence, a un effet d'arête dans le contact au sol, qui permet en particulier de casser un film d'eau éventuellement présent sur le sol.

La contrepartie de la présence de découpures dans une bande de roulement est une réduction du volume de matière à user. Pour limiter la réduction du volume de matière à user de la bande de roulement résultant de la présence de rainures et d'incisions, il a été proposé des découpures dites complexes qui permettent, par rapport à des rainures usuelles, ouvertes en totalité sur la surface de roulement, d'augmenter le volume de matière de la bande de roulement tout en respectant le volume de découpures pour un stockage de l'eau au-delà d'un seuil déterminé, quel que soit le niveau d'usure du pneumatique.

Des bandes de roulement comprenant de telles découpures complexes ont été décrites en particulier dans les documents US 2017/174008 A1, WO 2018/083414 A1, WO2011039194A1, WO2011101495A1, WO2012130735A1, WO2016188956A1, WO2017174925A1, WO2019008276A1 et WO2019122677A1. Une découpure complexe débouche généralement d'une façon discontinue, à intervalles réguliers ou non, sur la surface de roulement à l'état neuf. Une découpure complexe présente ainsi des cavités externes, ouvertes sur la surface de roulement et disjointes les unes des autres dans la direction principale de la découpure complexe. La direction principale de la découpure complexe correspond souvent mais pas obligatoirement à la direction d'écoulement de l'eau dans ladite découpure complexe lors d'un roulage sur un sol recouvert d'eau. Cette découpure complexe comprend, outre les cavités externes, des cavités internes formées à l'intérieur de la bande de roulement, non ouvertes directement sur la surface de roulement, à l'état neuf, et généralement reliées à la surface de roulement par des incisions. Ces cavités internes sont positionnées radialement et totalement à l'intérieur de la surface de roulement à l'état neuf, et intercalées entre les cavités externes. Les cavités internes peuvent être positionnées à différents niveaux de profondeur dans l'épaisseur de la bande de roulement. En outre, les cavités externes et les cavités internes d'une même découpure complexe sont reliées entre elles de telle sorte que la continuité de l'écoulement d'eau dans chaque découpure complexe est assurée à tout état d'usure de la bande de roulement, comme pour une rainure continue classique. En revanche, la juxtaposition de cavités internes et externes non liées entre elles, et donc ne permettant pas un écoulement de fluide des unes vers les autres, ne constitue pas une rainure continue et n'est donc pas considérée comme une découpure complexe.

Le volume de l'ensemble des cavités internes et des cavités externes, présentes dans une bande de roulement à découpures complexes, est généralement inférieur à celui de l'ensemble des rainures, présentes dans une bande de roulement usuelle, ouvertes en totalité sur la surface de roulement à neuf et ayant une profondeur correspondant à la profondeur maximale des cavités internes ou externes, d'où un volume de matière à user supérieur pour une découpure complexe. Une telle bande de roulement comprenant des découpures complexes est par conséquent plus rigide qu'une bande de roulement équivalente comprenant des rainures ouvertes classiques.

Une bande de roulement peut comporter à la fois des découpures complexes, débouchant sur la surface de roulement par intermittence, et des rainures classiques, débouchant sur la surface de roulement sur toute leur longueur.

Il est connu que toute bande de roulement comprenant des découpures génèrent un bruit de roulement, résultant de la vibration de l'air dans les découpures, lorsque la bande de roulement passe dans la surface de contact avec le sol. La vibration de l'air est la source de résonances générant le bruit de roulement. Ce phénomène est en particulier constaté dans une bande de roulement comprenant des découpures circonférentielles complexes.

Sur un plan normatif, un pneumatique pour véhicule poids lourd est classé, en fonction de son bruit de roulement, par exemple conformément au règlement n°117 de l'UNECE (United Nations Economic Commission for Europe : Commission économique pour l'Europe des Nations unies). Par conséquent la réduction du bruit de roulement d'un pneumatique est une préoccupation actuelle des fabricants de pneumatiques.

Les inventeurs se sont donc donnés pour objectif de réduire le bruit de roulement de la bande de roulement d'un pneumatique pour véhicule poids lourd comprenant des découpures circonférentielles complexes évolutives, constituées chacune par une alternance de cavités externes et de cavités internes, sans dégrader la résistance à l'usure irrégulière et la robustesse vis-à-vis des agressions de la bande de roulement.

Cet objectif a été atteint par un pneumatique pour un véhicule poids lourd comprenant une bande de roulement, destinée à entrer en contact avec un sol par l'intermédiaire d'une surface de roulement, et comprenant au moins deux découpures circonférentielles complexes juxtaposées, formant, avec une direction circonférentielle du pneumatique, un angle moyen au plus égal à 30°, et séparées l'une de l'autre par une unique rangée circonférentielle d'éléments en relief,
- chaque découpure circonférentielle complexe comprenant une alternance de cavités externes, ouvertes sur la surface de roulement et réparties selon un pas circonférentiel, et de cavités internes, cachées à l'intérieur de la bande de roulement à l'état neuf, deux cavités respectivement externe et interne consécutives étant reliées entre elles,
- chaque rangée circonférentielle d'éléments en relief, délimitée par deux découpures circonférentielles complexes juxtaposées, comprenant des éléments en relief, deux à deux séparés par des incisions, réparties selon un pas circonférentiel et ayant chacune deux extrémités débouchant dans une cavité externe de chacune des deux découpures circonférentielles complexes juxtaposées,
- la distance circonférentielle entre les deux extrémités respectives de toute incision de chaque rangée circonférentielle d'éléments en relief étant égale au pas circonférentiel des incisions,
- et le pas circonférentiel des cavités externes de chacune des deux découpures circonférentielles complexes juxtaposées étant égal au pas circonférentiel des incisions.

Une première caractéristique essentielle de l'invention est que la distance circonférentielle entre les deux extrémités respectives de toute incision de chaque rangée circonférentielle d'éléments en relief, délimitée par deux découpures circonférentielles complexes juxtaposées, est égale au pas circonférentiel des incisions, c'est-à-dire à la distance entre deux incisions consécutives parallèles mesurée selon la direction circonférentielle du pneumatique.

Cette condition implique que, lors du roulage du pneumatique selon la direction circonférentielle, pour une rangée circonférentielle d'éléments en relief donnée, lorsqu'une extrémité d'une incision sort de la surface de contact avec le sol, une extrémité de l'incision suivante entre dans la surface de contact avec le sol. Par conséquent, l'extrémité d'une incision donnée, sortant de la surface de contact, est axialement alignée avec l'extrémité de l'incision suivante, entrant dans la surface de contact. Autrement dit toute droite axiale de la surface de roulement intersecte soit une seule incision, soit les extrémités respectivement sortante et entrante de deux incisions consécutives. Cette configuration permet de réduire le bruit de roulement du pneumatique.

Une deuxième caractéristique essentielle de l'invention est que le pas circonférentiel des cavités externes de chacune des deux découpures circonférentielles complexes juxtaposées est égal au pas circonférentiel des incisions.

Cette condition implique que toute incision d'une rangée circonférentielle d'élément en relief donnée, délimitée par deux découpures circonférentielles complexes juxtaposées, débouche, au niveau de chacune de ses extrémités dans une cavité externe, en formant avec le contour de celle-ci un angle d'incidence constant. La valeur de cet angle d'incidence conditionne la robustesse de la zone d'extrémité d'incision vis-à-vis des agressions. Par conséquent, un angle d'incidence identique au niveau de chaque extrémité d'incision garantit un même niveau de robustesse vis-à-vis des agressions sur toute la circonférence du pneumatique.

Préférentiellement les cavités externes appartenant respectivement à deux découpures circonférentielles complexes juxtaposées et reliées par une incision, sont décalées, d'une découpure circonférentielle complexe à l'autre et selon la direction circonférentielle du pneumatique, d'un décalage circonférentiel égal à 0.5 fois le pas circonférentiel des cavités externes.

Un décalage circonférentiel, entre les cavités externes de deux découpures complexes juxtaposées égal à un demi - pas circonférentiel des cavités externes, mesuré entre les centres respectifs desdites cavités externes, permet de limiter la variation de largeur axiale de la rangée circonférentielle d'éléments en relief, délimitée par lesdites deux découpures complexes juxtaposées et donc la variation de volume de matière de ladite rangée circonférentielle, au tour de roue selon la direction circonférentielle. Ceci permet de limiter la variation du taux d'entaillement transversal, selon la direction circonférentielle, ce qui est bénéfique pour la performance acoustique. Par définition, le taux d'entaillement transversal ou axial, mesuré dans un plan axial donné, passant par l'axe de rotation du pneumatique, est défini comme le rapport entre la somme des sections axiales des découpures et la section totale de la bande de roulement supposée sans découpures. De plus un tel décalage circonférentiel garantit une uniformité satisfaisante du pneumatique ainsi qu'une bonne résistance à l'apparition de formes d'usure irrégulière.

Avantageusement le pas circonférentiel des cavités externes est constant.

Un pas circonférentiel des cavités externes constant est avantageux, du point de vue fabrication, car il permet de simplifier la fabrication du moule de cuisson du pneumatique qui peut alors être constitué par l'assemblage de motifs élémentaires identiques ayant une largeur circonférentielle constante. Toutefois un pas circonférentiel des cavités externes variable, impliquant un assemblage de motifs élémentaires ayant une largeur circonférentielle variable, présente un intérêt au niveau acoustique, car il permet d'améliorer la perception subjective du bruit par l'utilisateur, surtout à l'intérieur du véhicule.

Préférentiellement, toute incision forme avec la droite, passant par une de ses extrémités et tangente à la cavité externe correspondante, un angle au moins égal à 70°.

Une telle inclinaison de l'incision au niveau de chacune de ses extrémités débouchant dans une cavité externe permet d'éviter des pointes de matière aiguës au niveau de ladite extrémité d'incision, ce qui rend cette zone de la sculpture plus robuste vis-à-vis des agressions et moins sensible aux arrachements.

Avantageusement toute incision a une épaisseur, mesurée sur la surface de roulement, au moins égale à 0.1 mm. En fabrication, cette épaisseur minimale garantit la robustesse des éléments de moule, appelés lamelles, destinées à mouler lesdites incisions.

Encore avantageusement toute incision a une épaisseur, mesurée sur la surface de roulement, au plus égale à 1 mm. Au-delà de cette valeur l'incision n'assure plus aussi efficacement sa fonction de blocage des éléments de relief en vis-à-vis, ledit blocage étant nécessaire pour optimiser l'usure et la résistance au roulement.

Également avantageusement, toute découpure circonférentielle complexe ayant une profondeur, mesurée selon une direction radiale du pneumatique, toute incision a une profondeur, mesurée selon la direction radiale du pneumatique, au moins égale à 0.5 fois la profondeur de la découpure circonférentielle complexe.

Ce seuil minimal de profondeur d'incision garantit la pérennité de l'adhérence sur un sol mouillé ou enneigé de la bande de roulement, par un effet d'arête des incisions conservé au cours de l'usure de la bande de roulement. De plus sur un plan normatif, une valeur minimale de profondeur d'incision est exigée pour qu'un pneumatique soit labellisé « traction », par exemple selon la norme de l'E.T.R.T.O.

Encore avantageusement, toute découpure circonférentielle complexe ayant une profondeur, mesurée selon une direction radiale du pneumatique, toute incision a une profondeur, mesurée selon la direction radiale du pneumatique, au plus égale à la profondeur de la découpure circonférentielle complexe. L'adhérence sur un sol mouillé ou enneigé est ainsi garantie jusqu'à l'usure totale de la découpure circonférentielle complexe.

Selon un mode de réalisation particulier et avantageux, toute découpure circonférentielle complexe est délimitée par deux parois radiales ondulées à ondulations périodiques dont la période est égale au pas circonférentiel des cavités externes.

Selon un autre mode de réalisation particulier et avantageux, la bande de roulement comprend quatre découpures circonférentielles complexes juxtaposées et trois rangées circonférentielles d'éléments en relief intermédiaires.

Les caractéristiques de l'invention sont illustrées par les figures 1 à 4 schématiques et non représentées à l'échelle :
- Figure 1 : Vue en perspective d'une bande de roulement d'un pneumatique selon un mode de réalisation préféré de l'invention.
- Figure 2 : Vue de dessus d'une bande de roulement d'un pneumatique selon un mode de réalisation préféré de l'invention.
- Figure 3 : Vue de dessus de détail d'une bande de roulement d'un pneumatique selon un mode de réalisation préféré de l'invention.
- Figure 4 : Vue en coupe, selon une direction radiale, d'une incision débouchant dans une découpure complexe de bande de roulement d'un pneumatique selon un mode de réalisation préféré de l'invention.

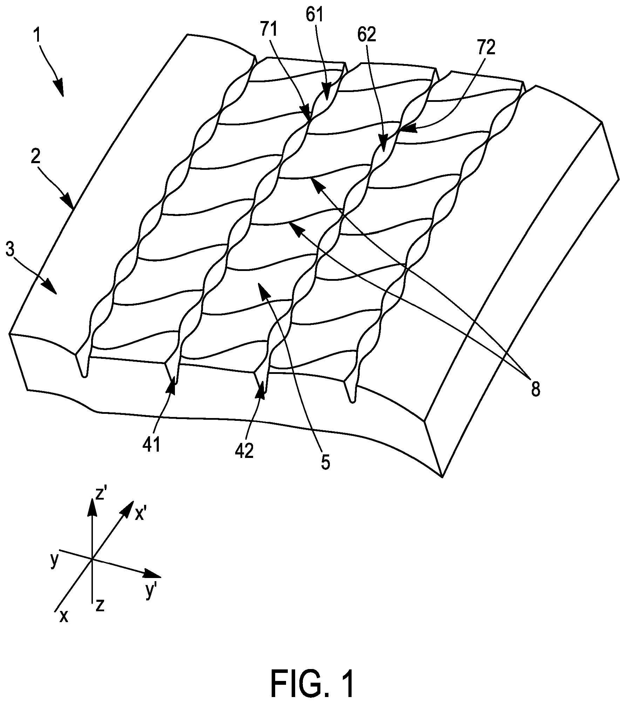

La figure 1 est une vue en perspective d'une bande de roulement 2 d'un pneumatique 1 selon un mode de réalisation préféré de l'invention, représentée dans un repère cylindrique défini par une direction circonférentielle XX', correspondant à la direction de rotation du pneumatique, une direction axiale YY', parallèle à l'axe de rotation du pneumatique, et une direction radiale ZZ', perpendiculaire à l'axe de rotation du pneumatique. Le pneumatique 1 pour un véhicule poids lourd comprend une bande de roulement 2, destinée à entrer en contact avec un sol par l'intermédiaire d'une surface de roulement 3, et comprenant, dans le mode de réalisation représenté, quatre découpures circonférentielles complexes (41, 42) juxtaposées et trois rangées circonférentielles d'éléments en relief 5 intermédiaires. Les découpures circonférentielles complexes (41, 42) forment, avec la direction circonférentielle XX' du pneumatique, un angle moyen égal à 0°, et sont deux à deux séparées par une unique rangée circonférentielle d'éléments en relief 5. Chaque découpure circonférentielle complexe (41, 42) est constituée par une alternance de cavités externes (61, 62), ouvertes sur la surface de roulement 3 et réparties selon un pas circonférentiel, et de cavités internes (71, 72), cachées à l'intérieur de la bande de roulement 2 à l'état neuf, deux cavités respectivement externe (61, 62) et interne (71, 72) consécutives étant reliées entre elles. Chaque rangée circonférentielle d'éléments en relief 5, délimitée par deux découpures circonférentielles complexes (41, 42) juxtaposées, est constituée par des éléments en relief 5, deux à deux séparés par des incisions 8, réparties selon un pas circonférentiel et ayant chacune deux extrémités débouchant dans une cavité externe (61, 62) de chacune des deux découpures circonférentielles complexes (41, 42) juxtaposées.

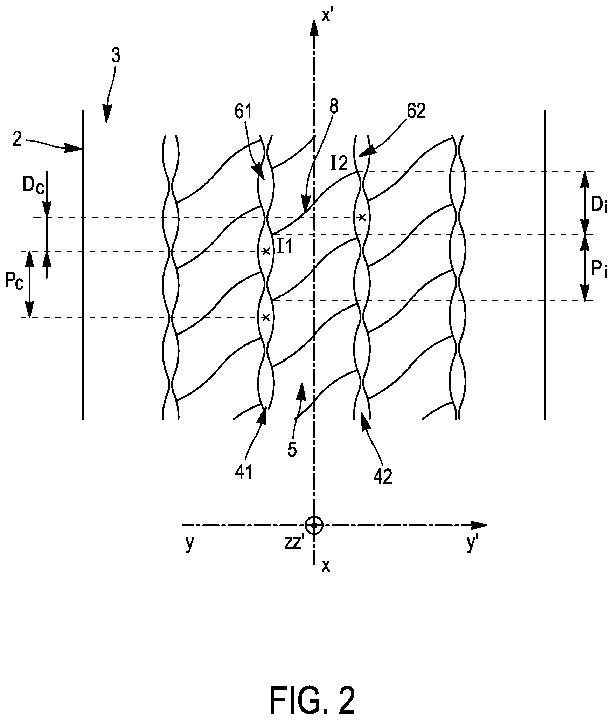

La figure 2 est une vue de dessus d'une bande de roulement d'un pneumatique selon un mode de réalisation préféré de l'invention. Chaque découpure circonférentielle complexe (41, 42) est constituée par une alternance de cavités externes (61, 62), ouvertes sur la surface de roulement 3 et réparties selon un pas circonférentiel Pc, et de cavités internes (71, 72), cachées à l'intérieur de la bande de roulement 2 à l'état neuf, deux cavités respectivement externe (61, 62) et interne (71, 72) consécutives étant reliées entre elles. Dans le mode de réalisation représenté, toute découpure circonférentielle complexe (41, 42) est délimitée par deux parois radiales ondulées à ondulations périodiques dont la période est égale au pas circonférentiel Pc des cavités externes (61, 62). Chaque rangée circonférentielle d'éléments en relief 5, délimitée par deux découpures circonférentielles complexes (41, 42) juxtaposées, est constituée par des éléments en relief 5, deux à deux séparés par des incisions 8, réparties selon un pas circonférentiel Pi et ayant chacune deux extrémités (I1, I2) débouchant dans une cavité externe (61, 62) de chacune des deux découpures circonférentielles complexes (41, 42) juxtaposées. Selon l'invention, la distance circonférentielle Di entre les deux extrémités respectives (I1, I2) de toute incision 8 de la rangée circonférentielle d'éléments en relief 5 est égale au pas circonférentiel Pi des incisions 8 et le pas circonférentiel Pc des cavités externes (61, 62) de chacune des deux découpures circonférentielles complexes (41, 42) juxtaposées est égal au pas circonférentiel Pi des incisions 8. Pour une rangée circonférentielle d'éléments en relief 5 donnée, l'extrémité d'une incision 8 donnée est axialement alignée avec l'extrémité de l'incision 8 suivante. Les cavités externes (61, 62), appartenant respectivement à deux découpures circonférentielles complexes (41, 42) juxtaposées et reliées par une incision 8, sont décalées, d'une découpure circonférentielle complexe à l'autre et selon la direction circonférentielle XX' du pneumatique, d'un décalage circonférentiel Dc égal à 0.5 fois le pas circonférentiel Pc des cavités externes (61, 62). Le décalage circonférentiel Dc est mesuré entre les centres respectifs desdites cavités externes (61, 62). De plus le pas circonférentiel Pc des cavités externes (61, 62) est constant.

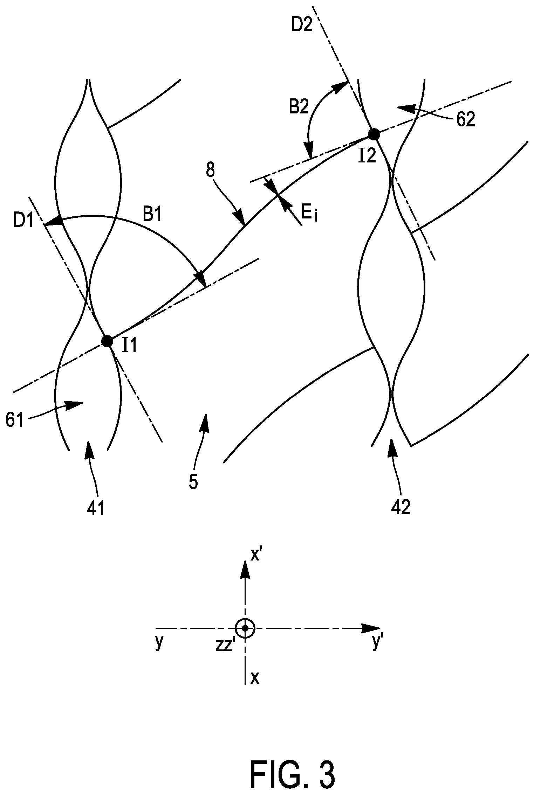

La figure 3 est une vue de dessus de détail d'une bande de roulement d'un pneumatique selon un mode de réalisation préféré de l'invention. Sur cette figure, est représentée en particulier une incision 8, ayant une épaisseur Ei et séparant deux éléments consécutifs d'une rangée d'éléments en relief 5. L'incision 8 a deux extrémités (I1, I2) débouchant dans une cavité externe (61, 62) de chacune des deux découpures circonférentielles complexes (41, 42) juxtaposées et forme avec la droite (D1, D2), passant par une de ses extrémités (I1, I2) et tangente à la cavité externe (61, 62) correspondante, un angle (B1, B2) au moins égal à 70°. Un tel angle (B1, B2) de l'incision 8 au niveau de chacune de ses extrémités (I1, I2) débouchant dans une cavité externe (61, 62) permet d'éviter des pointes de matière aiguës au niveau de ladite extrémité d'incision, ce qui rend cette zone de la sculpture plus robuste vis-à-vis des agressions.

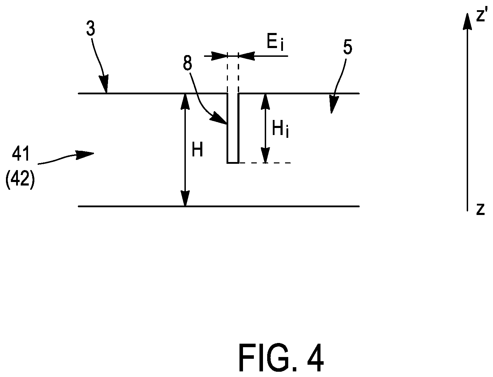

La figure 4 est une vue en coupe, selon une direction radiale ZZ', d'une incision 8 débouchant dans une découpure complexe (41, 42) de bande de roulement d'un pneumatique selon un mode de réalisation préféré de l'invention. Avantageusement l'incision 8 a une épaisseur Ei, mesurée sur la surface de roulement 3, au moins égale à 0.1 mm, et au plus égale à 1 mm. Une découpure circonférentielle complexe (41, 42) ayant une profondeur H, mesurée selon une direction radiale ZZ' du pneumatique, l'incision 8 a avantageusement une profondeur Hi, mesurée selon la direction radiale ZZ' du pneumatique, au moins égale à 0.5 fois la profondeur H de la découpure circonférentielle complexe (41, 42) et au plus égale à la profondeur H de la découpure circonférentielle complexe (41, 42).

Les inventeurs ont plus particulièrement étudié cette invention pour un pneumatique de dimension 275/70 R22.5, destiné à équiper tous les essieux d'un autobus urbain, et ayant une capacité de charge de 3550 kg pour une pression de gonflage égale à 9 bars.

Le tableau 1 ci-dessous présente les caractéristiques d'un pneumatique selon l'invention I:

**[Tableau 1]**

| **Caractéristiques** | **I** | **Commentaires** |
|---|---|---|
| Angle moyen des découpures circonférentielles complexes (61, 62), par rapport à la direction circonférentielle XX' | 0° | Découpures complexes strictement circonférentielles |
| Distance circonférentielle Di entre les extrémités (I1, I2) d'une incision 8 | 31.6 mm | Di = Pc |
| Pas circonférentiel Pc des cavités externes (61, 62) | 31.6 mm | |
| Pas circonférentiel Pi des incisions 8 | 31.6 mm | Pi = Pc |
| Distance circonférentielle Dc entre les cavités externes respectives (61, 62) de 2 découpures circonférentielles complexes (41, 42) juxtaposées | 15.8 mm | Dc = 0.5*Pc |
| Angle des incisions 8, au niveau de leurs extrémités, par rapport à la direction circonférentielle XX' | 50° par rapport à XX' | Angle déterminé par rapport à la direction circonférentielle XX', et non par rapport à la tangente à la cavité externe dans laquelle débouche l'incision |
| Epaisseur Ei d'incision | 0.4 mm | Compris dans l'intervalle [0.1 mm ; 1 mm] |
| Profondeur Hi d'incision 8 | 17.3 mm | Egale à la profondeur H de la découpure circonférentielle complexe - 0.5 mm |

Un test de bruit de roulement, conformément au règlement n°117 de l'UNECE, a démontré un niveau de bruit égal à 71 dB pour un pneumatique de dimension 275/70 R22.5 selon l'invention.

L'invention est applicable plus généralement à tout pneumatique destiné à équiper en particulier tout type d'essieu de poids lourd directeurs, moteurs ou porteurs, pour un usage routier.

## Revendications

1. Pneumatique (1) pour un véhicule poids lourd comprenant une bande de roulement (2), destinée à entrer en contact avec un sol par l'intermédiaire d'une surface de roulement (3), et comprenant au moins deux découpures circonférentielles complexes (41, 42) juxtaposées, formant, avec une direction circonférentielle (XX') du pneumatique, un angle moyen au plus égal à 30°, et séparées l'une de l'autre par une unique rangée circonférentielle d'éléments en relief (5),
- chaque découpure circonférentielle complexe (41, 42) comprenant une alternance de cavités externes (61, 62), ouvertes sur la surface de roulement (3) et réparties selon un pas circonférentiel (Pc), et de cavités internes (71, 72), cachées à l'intérieur de la bande de roulement (2) à l'état neuf, deux cavités respectivement externe (61, 62) et interne (71, 72) consécutives étant reliées entre elles,
- chaque rangée circonférentielle d'éléments en relief (5), délimitée par deux découpures circonférentielles complexes (41, 42) juxtaposées, comprenant des éléments en relief (5), deux à deux séparés par des incisions (8), réparties selon un pas circonférentiel (Pi) et ayant chacune deux extrémités (I1, I2) débouchant dans une cavité externe (61, 62) de chacune des deux découpures circonférentielles complexes (41, 42) juxtaposées,
- le pas circonférentiel (Pc) des cavités externes (61, 62) de chacune des deux découpures circonférentielles complexes (41, 42) juxtaposées étant égal au pas circonférentiel (Pi) des incisions (8),
**caractérisé en ce que** la distance circonférentielle (Di) entre les deux extrémités respectives (I1, I2) de toute incision (8) de chaque rangée circonférentielle d'éléments en relief (5) est égale au pas circonférentiel (Pi) des incisions (8).

2. Pneumatique (1) selon la revendication 1, **dans lequel** les cavités externes (61, 62), appartenant respectivement à deux découpures circonférentielles complexes (41, 42) juxtaposées et reliées par une incision (8), sont décalées, d'une découpure circonférentielle complexe à l'autre et selon la direction circonférentielle (XX') du pneumatique, d'un décalage circonférentiel (Dc) égal à 0.5 fois le pas circonférentiel (Pc) des cavités externes (61, 62).

3. Pneumatique (1) selon l'une des revendications 1 ou 2, **dans lequel** le pas circonférentiel (Pc) des cavités externes (61, 62) est constant.

4. Pneumatique (1) selon l'une quelconque des revendications 1 à 3, **dans lequel** toute incision (8) forme avec la droite (D1, D2), passant par une de ses extrémités (I1, I2) et tangente à la cavité externe (61, 62) correspondante, un angle (B1, B2) au moins égal à 70°.

5. Pneumatique (1) selon l'une quelconque des revendications 1 à 4, **dans lequel** toute incision (8) a une épaisseur (Ei), mesurée sur la surface de roulement (3), au moins égale à 0.1 mm.

6. Pneumatique (1) selon l'une quelconque des revendications 1 à 5, **dans lequel** toute incision (8) a une épaisseur (Ei), mesurée sur la surface de roulement (3), au plus égale à 1 mm.

7. Pneumatique (1) selon l'une quelconque des revendications 1 à 6, toute découpure circonférentielle complexe (41, 42) ayant une profondeur (H), mesurée selon une direction radiale (ZZ') du pneumatique, **dans lequel** toute incision (8) a une profondeur (Hi), mesurée selon la direction radiale (ZZ') du pneumatique, au moins égale à 0.5 fois la profondeur (H) de la découpure circonférentielle complexe (41, 42).

8. Pneumatique (1) selon l'une quelconque des revendications 1 à 7, toute découpure circonférentielle complexe (41, 42) ayant une profondeur (H), mesurée selon une direction radiale (ZZ') du pneumatique, **dans lequel** toute incision (8) a une profondeur (Hi), mesurée selon la direction radiale (ZZ') du pneumatique, au plus égale à la profondeur (H) de la découpure circonférentielle complexe (41, 42).

9. Pneumatique (1) selon l'une quelconque des revendications 1 à 8, **dans lequel** toute découpure circonférentielle complexe (41, 42) est délimitée par deux parois radiales ondulées à ondulations périodiques dont la période est égale au pas circonférentiel (Pc) des cavités externes (61, 62).

10. Pneumatique (1) selon l'une quelconque des revendications 1 à 9, **dans lequel** la bande de roulement comprend quatre découpures circonférentielles complexes (41, 42) juxtaposées et trois rangées circonférentielles d'éléments en relief (5) intermédiaires.

## Patentansprüche

1. Reifen (1) für ein Schwerlastfahrzeug, welcher einen Laufstreifen (2) umfasst, der dazu bestimmt ist, über eine Lauffläche (3) mit einem Boden in Kontakt zu kommen, und mindestens zwei nebeneinander angeordnete komplexe umlaufende Ausschnitte (41, 42) umfasst, die mit einer Umfangsrichtung (XX') des Reifens einen mittleren Winkel von höchstens 30° bilden und durch eine einzige umlaufende Reihe von Profilelementen (5) voneinander getrennt sind,
- wobei jeder komplexe umlaufende Ausschnitt (41, 42) sich abwechselnde äußere Hohlräume (61, 62), die an der Lauffläche (3) offen sind und gemäß einer Umfangsteilung (Pc) verteilt sind, und innere Hohlräume (71, 72), die im Neuzustand im Inneren des Laufstreifens (2) verborgen sind, umfasst, wobei ein äußerer (61, 62) und ein innerer Hohlraum (71, 72), die aufeinanderfolgen, jeweils miteinander verbunden sind,
- wobei jede umlaufende Reihe von Profilelementen (5), die von zwei nebeneinander angeordneten komplexen umlaufenden Ausschnitten (41, 42) begrenzt wird, Profilelemente (5) umfasst, die paarweise durch Einschnitte (8) getrennt sind, die gemäß einer Umfangsteilung (Pi) verteilt sind und jeweils zwei Enden (I1, I2) aufweisen, die in einen äußeren Hohlraum (61, 62) jedes der zwei nebeneinander angeordneten komplexen umlaufenden Ausschnitte (41, 42) münden,
- wobei die Umfangsteilung (Pc) der äußeren Hohlräume (61, 62) jedes der zwei nebeneinander angeordneten komplexen umlaufenden Ausschnitte (41, 42) gleich der Umfangsteilung (Pi) der Einschnitte (8) ist,
**dadurch gekennzeichnet, dass** der Umfangsabstand (Di) zwischen den zwei jeweiligen Enden (I1, I2) jedes Einschnitts (8) jeder umlaufenden Reihe von Profilelementen (5) gleich der Umfangsteilung (Pi) der Einschnitte (8) ist.

2. Reifen (1) nach Anspruch 1, wobei die äußeren Hohlräume (61, 62), die jeweils zu einem von zwei nebeneinander angeordneten komplexen umlaufenden Ausschnitten (41, 42) gehören und durch einen Einschnitt (8) verbunden sind, von einem komplexen umlaufenden Ausschnitt zum anderen und in der Umfangsrichtung (XX') des Reifens um einen umfänglichen Versatz (Dc) versetzt sind, der gleich dem 0,5-Fachen der Umfangsteilung (Pc) der äußeren Hohlräume (61, 62) ist.

3. Reifen (1) nach einem der Ansprüche 1 oder 2, wobei die Umfangsteilung (Pc) der äußeren Hohlräume (61, 62) konstant ist.

4. Reifen (1) nach einem der Ansprüche 1 bis 3, wobei jeder Einschnitt (8) mit der Geraden (D1, D2), die durch eines seiner Enden (I1, I2) verläuft und zu dem entsprechenden äußeren Hohlraum (61, 62) tangential ist, einen Winkel (B1, B2) von mindestens 70° bildet.

5. Reifen (1) nach einem der Ansprüche 1 bis 4, wobei jeder Einschnitt (8) eine auf der Lauffläche (3) gemessene Dicke (Ei) von mindestens 0,1 mm aufweist.

6. Reifen (1) nach einem der Ansprüche 1 bis 5, wobei jeder Einschnitt (8) eine auf der Lauffläche (3) gemessene Dicke (Ei) von höchstens 1 mm aufweist.

7. Reifen (1) nach einem der Ansprüche 1 bis 6, wobei jeder komplexe umlaufende Ausschnitt (41, 42) eine in einer radialen Richtung (ZZ') des Reifens gemessene Tiefe (H) aufweist, wobei jeder Einschnitt (8) eine in der radialen Richtung (ZZ') des Reifens gemessene Tiefe (Hi) aufweist, die mindestens gleich dem 0,5-Fachen der Tiefe (H) des komplexen umlaufenden Ausschnitts (41, 42) ist.

8. Reifen (1) nach einem der Ansprüche 1 bis 7, wobei jeder komplexe umlaufende Ausschnitt (41, 42) eine in einer radialen Richtung (ZZ') des Reifens gemessene Tiefe (H) aufweist, wobei jeder Einschnitt (8) eine in der radialen Richtung (ZZ') des Reifens gemessene Tiefe (Hi) aufweist, die höchstens gleich der Tiefe (H) des komplexen umlaufenden Ausschnitts (41, 42) ist.

9. Reifen (1) nach einem der Ansprüche 1 bis 8, wobei jeder komplexe umlaufende Ausschnitt (41, 42) von zwei gewellten radialen Wänden mit periodischen Wellungen begrenzt wird, deren Periode gleich der Umfangsteilung (Pc) der äußeren Hohlräume (61, 62) ist.

10. Reifen (1) nach einem der Ansprüche 1 bis 9, wobei der Laufstreifen vier nebeneinander angeordnete komplexe umlaufende Ausschnitte (41, 42) und drei dazwischen angeordnete umlaufende Reihen von Profilelementen (5) umfasst.

## Claims

1. Tyre (1) for a heavy-duty vehicle, comprising a tread (2), intended to come into contact with the ground via a tread surface (3), and comprising at least two juxtaposed complex circumferential cuts (41, 42) which, with a circumferential direction (XX') of the tyre, form a mean angle at most equal to 30°, and which are separated from one another by a single circumferential row of raised elements (5),
- each complex circumferential cut (41, 42) comprising an alternation of external cavities (61, 62), which open onto the tread surface (3) and are distributed at a circumferential pitch (Pc), and of internal cavities (71, 72), which are hidden inside the tread (2) when the tread is new, two consecutive respectively external cavities (61, 62) and internal cavities (71, 72) being connected to one another,
- each circumferential row of raised elements (5), which is delimited by two juxtaposed complex circumferential cuts (41, 42), comprising raised elements (5), pairs of which are separated by sipes (8), distributed at a circumferential pitch (Pi) and each having two ends (I1,I2) opening into an external cavity (61, 62) of each of the two juxtaposed complex circumferential cuts (41, 42),
- the circumferential pitch (Pc) of the external cavities (61, 62) of each of the two
juxtaposed complex circumferential cuts (41, 42) being equal to the circumferential pitch (Pi) of the sipes (8).
**characterized in that** the circumferential distance (Di) between the respective two ends (I1, I2) of any sipe (8) in each circumferential row of raised elements (5) is equal to the circumferential pitch (Pi) of the sipes (8).

2. Tyre (1) according to Claim 1, **wherein** the external cavities (61, 62), belonging respectively to two juxtaposed complex circumferential cuts (41, 42) and connected by a sipe (8), are offset, from one complex circumferential cut to the other and in the circumferential direction (XX') of the tyre, by a circumferential offset (Dc) equal to 0.5 times the circumferential pitch (Pc) of the external cavities (61, 62).

3. Tyre (1) according to one of Claims 1 or 2, **wherein** the circumferential pitch (Pc) of the external cavities (61, 62) is constant.

4. Tyre (1) according to any one of Claims 1 to 3, **wherein** any sipe (8) forms, with the straight line (D1, D2) passing through one of its ends (I1, I2) and tangential to the corresponding external cavity (61, 62), an angle (B1, B2) at least equal to 70°.

5. Tyre (1) according to any one of Claims 1 to 4, **wherein** any sipe (8) has a thickness (Ei), measured on the tread surface (3), at least equal to 0.1 mm.

6. Tyre (1) according to any one of Claims 1 to 5, **wherein** any sipe (8) has a thickness (Ei), measured on the tread surface (3), at most equal to 1 mm.

7. Tyre (1) according to any one of Claims 1 to 6, any complex circumferential cut (41, 42) having a depth (H), measured in a radial direction (ZZ') of the tyre, **wherein** any sipe (8) has a depth (Hi), measured in the radial direction (ZZ') of the tyre, at least equal to 0.5 times the depth (H) of the complex circumferential cut (41, 42).

8. Tyre (1) according to any one of Claims 1 to 7, any complex circumferential cut (41, 42) having a depth (H), measured in a radial direction (ZZ') of the tyre, **wherein** any sipe (8) has a depth (Hi), measured in the radial direction (ZZ') of the tyre, at most equal to the depth (H) of the complex circumferential cut (41, 42).

9. Tyre (1) according to any one of Claims 1 to 8, **wherein** any complex circumferential cut (41, 42) is delimited by two undulating radial walls with periodic undulations of which the period is equal to the circumferential pitch (Pc) of the external cavities (61, 62).

10. Tyre (1) according to any one of Claims 1 to 9, **wherein** the tread comprises four juxtaposed complex circumferential cuts (41, 42) and three intermediate circumferential rows of raised elements (5).
